# FASCICULE DE BREVET EUROPEEN

(11) **EP 2 672 492 B1**
(45) Date de publication et mention de la délivrance du brevet: **13.08.2014**
(21) Numéro de dépôt: 13170337.3
(22) Date de dépôt: 04.06.2013
(51) Int. Cl.: H01F 6/04

(54) **Support mécanique de systèmes thermiques ou électriques**
Mechanische Halterung für thermische oder elektrische Systeme
Mechanical support for electrical or thermal systems

(30) Priorité: 08.06.2012 FR 1255356
(43) Date de publication de la demande: 11.12.2013
(73) Titulaire: COMMISSARIAT A L'ENERGIE ATOMIQUE ET AUX ENERGIES ALTERNATIVES, 75015 Paris (FR)
(72) Inventeur: Berthier, Romain, 91430 IGNY (FR)
(74) Mandataire: Cabinet Laurent & Charras

(56) Documents cités:
- US-A- 1 342 310
- US-A- 2 795 765
- US-A- 5 034 716
- US-A1- 2011 148 417

## Description

### DOMAINE DE L'INVENTION

La présente invention se rapporte à des systèmes destinés à servir de support dans des applications nécessitant à la fois des qualités de stabilité mécanique, et des qualités de bonne isolation thermique et/ou électrique.

L'invention trouve, notamment, mais non exclusivement, son application en cryogénie. On entend par cryogénie le domaine des températures inférieures à 120 Kelvin (K), soit -150 degrés Celcius (°C), à partir desquelles les gaz de l'air se liquéfient.

Par exemple, l'invention peut ainsi servir de support à des aimants devant être isolés électriquement.

Plus particulièrement, l'invention peut servir de support à des aimants supraconducteurs massifs, à des caméras thermiques, à des cryostats, à des calorimètres ou encore à des bolomètres couramment utilisés en astrophysique.

### ETAT DE LA TECHNIQUE

Dans certaines applications, il est nécessaire de combiner une grande stabilité mécanique, appelée aussi résistance au flambement, avec un fort pouvoir d'isolation thermique et/ou électrique. C'est en particulier le cas des supports mécaniques de systèmes « cryogéniques ». Ces supports comportent deux faces d'appui, l'une de ces faces étant en contact avec un objet qui doit être maintenu à des températures cryogéniques, et l'autre face étant en contact avec un environnement pouvant être à une autre température, plus ou moins élevée. Dans le cas d'aimants supraconducteurs par exemple, de tels supports peuvent être soumis à des efforts très importants, susceptibles d'atteindre plusieurs milliers de kilonewtons (kN), exercés via l'une des faces d'appui par les objets supportés pouvant avoir une masse de plusieurs tonnes. Étant donné que les deux faces d'appui sont à des températures différentes, il existe dans le support un flux thermique des zones chaudes vers les zones froides.

Afin de limiter la puissance nécessaire au refroidissement de l'objet supporté, il est par conséquent nécessaire de garantir l'isolation thermique du support pour réduire ce flux thermique.

Les supports cryogéniques actuels se composent souvent d'un cylindre porteur appelé « virole ». Ces supports mécaniques sont communément fabriqués en acier inoxydable (inox), ce qui permet de bénéficier d'une bonne résistance mécanique à faible coût. Cependant, l'acier inoxydable conduit bien la chaleur, ce qui nécessite le recours à des systèmes de refroidissement plus encombrants donc peu pratiques d'utilisation et surtout plus coûteux pour maintenir l'objet supporté à une température fixe.

Il est possible de choisir des matériaux présentant de meilleures propriétés d'isolation thermique que l'acier inoxydable pour fabriquer ces viroles, par exemple, les matériaux composites, qui sont connus pour conduire peu la chaleur. Cependant, la fiabilité mécanique des viroles en composite est faible.

Une autre solution envisageable pour fabriquer des viroles très résistantes mécaniquement consiste à utiliser un alliage de titane (par exemple le TA6V). La structure ainsi obtenue est quatre fois plus résistante mécaniquement qu'une virole en acier inoxydable, mais bien que deux fois plus isolant que l'inox, présente l'inconvénient d'être néanmoins un bon conducteur de la chaleur tout comme l'inox, tout en coûtant cinq fois plus cher à la production qu'une virole en inox.

US 2011/148417 A1, US 5 034 716 A, US 2 795 765 A et US 1 342 310 A montrent des supports evidés selon le préambule de la revendication 1.

### EXPOSE DE L'INVENTION

La présente invention propose de résoudre le problème de l'apparente incompatibilité entre forte stabilité mécanique et fort pouvoir d'isolation thermique et/ou électrique pour un support fiable et peu coûteux pour des applications thermiques et/ou électriques.

Pour y parvenir, la présente invention consiste en un support évidé, comprenant deux faces d'appui, sensiblement parallèles, séparées par une face latérale définissant un périmètre, ladite face latérale comprenant des orifices traversants répartis sur au moins une rangée sensiblement parallèle audites faces d'appui, et ledit support comportant au moins une bride de renfort, en contact avec ladite face latérale dudit support, tout le long du périmètre de ladite face latérale, sur ou au voisinage de la ou de chaque rangée d'orifices traversants.

Par rangée « parallèle », on entend ici une série d'orifices traversants réalisée sur le périmètre du support, une portion de chaque orifice de la série étant disposée dans un plan parallèle aux faces d'appui.

Le support ainsi décrit permet de combiner l'effet d'isolation thermique et/ou électrique conféré à la structure par la présence d'orifices traversants avantageusement positionnés en rangées sur le pourtour de l'objet, avec la stabilité mécanique d'un support traditionnel, grâce à l'adjonction de brides de renfort au niveau des points faibles de la structure. Ces points faibles sont en particulier dus à la présence des orifices traversants dans le support.

Selon un mode de réalisation, le support adopte une forme sensiblement cylindrique ou tronconique et possède au moins une face d'appui circulaire formant une base.

Ce type de géométrie circulaire offre l'avantage d'être facile à réaliser, et de ne pas présenter d'orientation privilégiée suivant l'axe de révolution du cylindre ou du cône. D'autre part, lorsque les orifices traversants sont répartis de manière à former des rangées présentant une symétrie de révolution autour de l'axe du cylindre, les contraintes mécaniques appliquées via l'une des faces d'appui du support sont réparties de manière plus homogène dans ledit support. D'autre part, ce type de géométrie permet de simplifier la modélisation du support et donc rendre plus fiables les calculs de la charge que peut supporter ce support.

Notamment, selon un mode de réalisation, les orifices traversants de chaque rangée sont régulièrement espacés, les orifices traversants d'une rangée étant décalés d'une demi période par rapport aux orifices traversants d'une rangée adjacente. Ceci permet d'accroître le trajet du flux thermique à travers le support, et ainsi contribuer à augmenter la résistance thermique dudit support.

Selon un autre mode de réalisation, le support comprend des orifices traversants ayant la même taille sur chaque rangée, et de taille différente entre au moins deux rangées. Cette variation dans la taille des orifices traversants permet ainsi d'augmenter la longueur des parties les plus sensibles par exemple au rétreint thermique, sans nécessairement créer un nombre élevé de rangées.

Selon un autre mode de réalisation, dans chaque rangée, la dimension maximale de chaque orifice traversant est agencée sensiblement dans un même plan, la bride de renfort associée à ladite rangée étant en contact avec la face latérale du support dans ledit plan. En d'autres termes, les brides de renfort sont positionnées dans les endroits du support présentant le moins de matière, c'est-à-dire au milieu de chaque rangée d'orifices traversants. Ces zones allégées rendent la structure particulièrement sensible au flambement mécanique que peut subir le support sous l'effet des charges appliquées via l'une des faces d'appui, et constituent donc des endroits appropriés pour recevoir une bride de renfort. Les brides de renfort permettent ainsi de réduire les contraintes au niveau des isthmes.

Selon un autre mode de réalisation, le support comprend en outre un thermostat en contact avec au moins une bride de renfort afin de maintenir celle-ci à une température constante. Le thermostat permet de refroidir localement le support en général à une température plus basse que celle que ce point du support aurait atteint naturellement.

Selon un autre mode de réalisation, le support est réalisé en un matériau choisi dans le groupe constitué de l'acier inoxydable, le titane, le cuivre, l'aluminium, l'Epoxy, la céramique, et l'un des mélanges d'au moins deux desdits matériaux. Ces matériaux répondent au mieux aux différentes exigences du support, notamment un coût de production relativement faible, une bonne résistance mécanique, un module d'Young élevé, une facilité de production et une bonne maitrise des procédés d'usinage qui permettent de fabriquer des supports fiables.

Selon un autre mode de réalisation, les brides de renfort ont une épaisseur inférieure au double de l'épaisseur du support et supérieure à la moitié de l'épaisseur dudit support. Cette condition sur l'épaisseur des brides permet d'obtenir un optimum de stabilité mécanique et une bonne résistance aux charges et au rétreint thermique d'après des simulations effectuées numériquement.

Selon un autre mode de réalisation, chaque bride de renfort a une section rectangulaire dont la dimension la plus grande est dans le sens radial audit support. Cette configuration permet d'aboutir à un optimum de stabilité mécanique et une bonne résistance aux charges ainsi qu'au rétreint thermique. D'autre part, cette configuration des brides de renfort permet de disposer d'une surface adéquate pour poser des moyens de thermalisation du support afin de placer ce dernier en contact avec un thermostat.

Selon un autre mode de réalisation, le support comprend également entre deux rangées d'orifices traversants, des segments de bride, disposés de façon sensiblement parallèle aux faces d'appui du support, tout le long du périmètre de la face latérale du support. Ces brides peuvent avantageusement accueillir des moyens de thermalisation entre les rangées d'orifices traversants et plus généralement être utilisés comme des moyens de support.

### DESCRIPTION SOMMAIRE DES FIGURES

L'invention sera mieux comprise à la lecture de la description qui suit, donnée uniquement à titre d'exemple, et réalisée en relation avec les dessins annexés, dans lesquels les mêmes références désignent des éléments identiques ou analogues et dans lesquels :
- la figure 1 est une vue en perspective schématique d'une virole comprenant des orifices traversants et des brides de renfort, selon un premier mode de réalisation de l'invention ;
- La figure 2 est une vue en section longitudinale d'une portion de virole percée d'orifices traversants tous alignés d'un niveau à l'autre ;
- La figure 3 est une vue en section longitudinale d'une portion de virole percée d'orifices traversants agencés en quinconce ;
- La figure 4 est une vue en perspective schématique d'une portion de virole percée d'orifices traversants et comprenant des brides inter-étage sectorisées ;
- La figure 5 est une vue de détail en perspective d'une virole ;
- La figure 6 est une vue en perspective schématique d'un virole de forme sensiblement tronconique.

### DESCRIPTION DETAILLEE DE L'INVENTION

Il va à présent être décrit un support mécanique de systèmes thermiques ou électriques, auquel il est fait référence sous le nom de « virole », présentant une forte stabilité mécanique tout en bénéficiant d'une bonne isolation thermique ou électrique.

Les conductions thermique et électrique ont des comportements similaires. Dans la suite du texte, l'exemple de l'isolation thermique sera utilisé mais il est clair que toutes les considérations techniques seront aisément transposables à une isolation électrique.

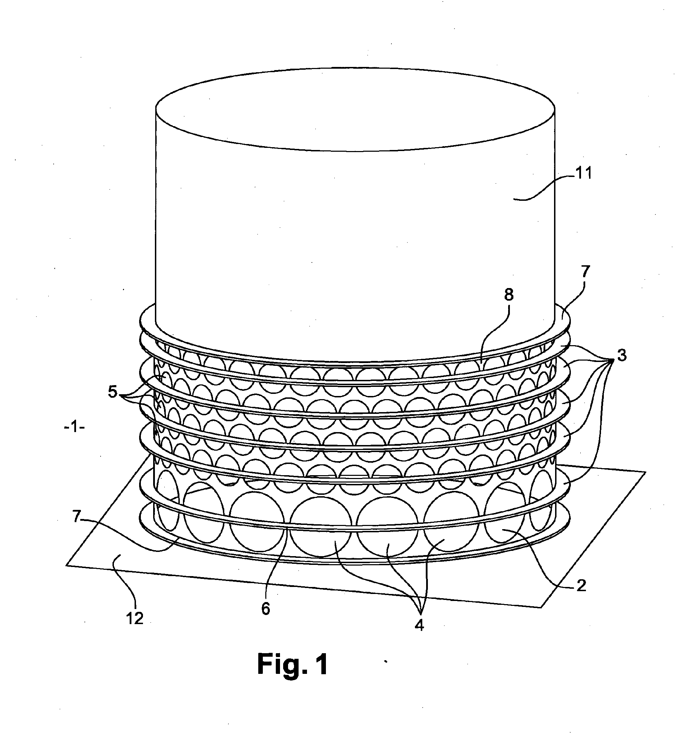

En se référant à la figure 1, la virole **1** est par exemple destinée à supporter un objet lourd **11** au dessus d'un plan **12,** l'objet **11** pouvant avoir une masse de plusieurs tonnes, comme par exemple un aimant supraconducteur hybride à haut champ magnétique ayant une masse de 18 tonnes, et pouvant exercer des efforts magnétiques pouvant atteindre 370 tonnes sur la virole **1.**

L'objet supporté par la virole **1** est maintenu à très basse température, par exemple 1,8K tandis que la base de la virole **1** peut être à la température ambiante, à savoir environ 300 K.

La virole **1** est une structure tubulaire comprenant une face d'appui supérieure pour supporter l'objet **11,** une face d'appui inférieure pour pouvoir être posée sur le plan **12,** et une face latérale **2.** Des orifices traversants circulaires **2** sont ménagés sur toute la face latérale du support, et forment des rangées **4** d'orifices traversants sur plusieurs niveaux **5.**

La virole **1** est renforcée par des brides de renfort **3.** Ces brides de renfort **3** sont placées au niveau des points faibles **6** de chaque rangée **4,** c'est-à-dire sur les segments de lignes circonférentielles comprenant le moins de matériau, également appelés isthmes **6.**

La virole **1** est avantageusement fabriquée de manière à présenter une forme tubulaire cylindrique régulière. Par exemple, selon un mode de réalisation particulier, lorsque la virole **1** sert de support à un aimant supraconducteur hybride à haut champ magnétique de masse 18 tonnes, cette virole **1** a pour dimensions caractéristiques :
- diamètre de 2,3 m
- hauteur de 1,2 m et
- épaisseur de 12 millimètres.

La virole **1** est fabriquée préférentiellement en un seul matériau et d'un seul tenant, pour éviter l'apparition de jeu au niveau des jonctions entre matériaux, et également pour limiter les déformations et les contraintes mécaniques inhérentes aux différences de coefficients de dilatation thermique entre matériaux qui peuvent fragiliser l'ensemble. Une virole **1** monobloc en un seul tenant présente également l'avantage d'être plus facile à réaliser, mais il peut être envisagé d'assembler plusieurs viroles.

De manière avantageuse, le choix du matériau constitutif de la virole **1** résulte de la volonté de répondre de façon optimale à l'un ou plusieurs des critères mentionnés dans les paramètres suivants :
■ une faible conductivité thermique ;
■ un grand module d'Young, ce qui limite les déformations de la virole et augmente la stabilité mécanique ;
■ une limite élastique élevée, permettant à la virole de résister à des contraintes mécaniques fortes ;
■ un coût de production faible ;
■ une mise en oeuvre facile, notamment pour réaliser des soudures au niveau des isthmes **6 ;** et
■ une virole fiable, c'est-à-dire qui ne présente pas de défauts de fabrication et qui a une durée de vie importante.

La virole **1** est par exemple constituée d'un acier inoxydable, d'un alliage de titane de type TA6V, de cuivre, d'aluminium ou d'un matériau composite. L'aluminium et le cuivre possèdent un module d'Young, une limite élastique et un pouvoir isolant plus faibles que l'acier inoxydable et l'alliage de titane de type TA6V, mais ils présentent l'avantage d'être plus facilement mis en oeuvre en fonderie. En guise de matériaux composites, il est possible d'avoir recours à un alliage de type carbone/Epoxy ou fibre de verre/Epoxy. Alternativement, les céramiques comme l'alumine ou la zircone sont des céramiques peut coûteuses, à fort pouvoir isolant et avec de meilleures qualités thermomécaniques que l'inox. Ces céramiques présentent néanmoins le désavantage d'être plus difficiles à mettre en oeuvre pour les formes compliquées. Les aciers inoxydables et l'alliage de titane TA6V sont par conséquent avantageusement privilégiés pour leur grand module d'Young, leur fiabilité, leur facilité de mise en oeuvre et leur prix relativement accessible.

Les orifices traversants **2** dans la virole **1** ont pour effet de diviser par un facteur 4 à 6 la conduction de la chaleur dans le support **1,** ce qui présente l'avantage de permettre à l'utilisateur de faire des économies sur le système de refroidissement de l'objet à supporter.

On choisira avantageusement le nombre d'orifices traversants **2** par rangée **4** de manière à créer des isthmes **6** étroits, et de préférence des nombres d'orifices ayant un sous multiple commun le plus petit possible de manière à obtenir la plus grande symétrie possible pour être homogène.

La disposition des orifices traversants **2** sur la virole **1** suit préférentiellement une logique visant à rallonger le plus possible le chemin emprunté par le flux thermique à travers le matériau constitutif de la virole **1.** En effet, la résistance thermique d'un objet est proportionnelle à la longueur du trajet emprunté par la chaleur pour traverser l'objet. L'allongement de ce chemin thermique est optimisé dans le cas de la disposition en quinconce.

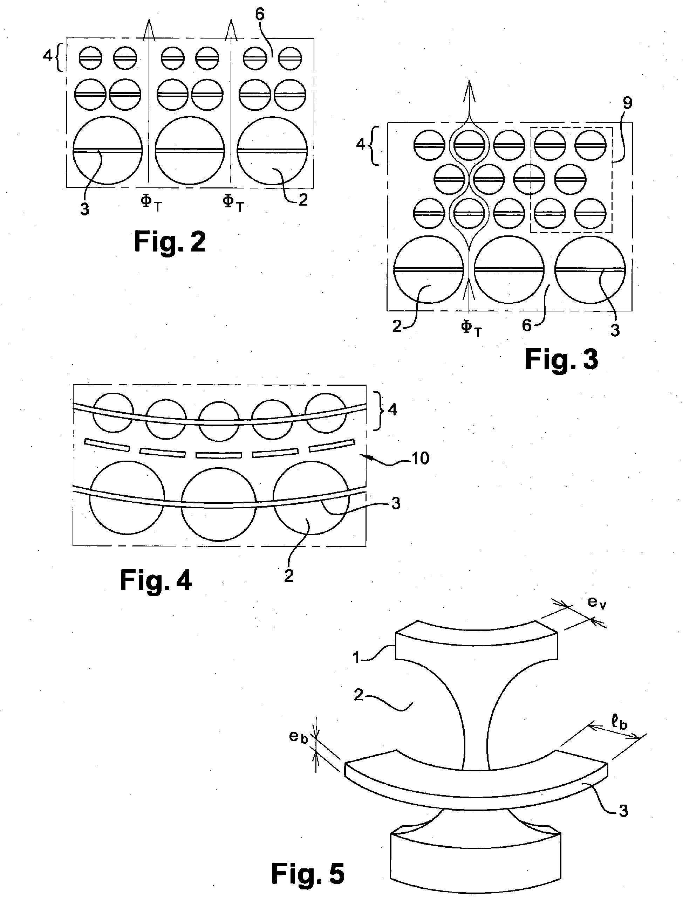

Ainsi, comme cela est représenté sur la figure 2, une disposition identique d'orifices traversants d'une rangée **4** à l'autre permet à la chaleur d'emprunter un chemin direct le long de l'axe du cylindre constituant la virole **1.** Dans cette configuration, la chaleur circule des parties chaudes à 300 K de la virole **1** aux parties froides à 1,8 K de la virole **1** en empruntant un chemin court, correspondant à un minimum de résistance thermique.

En revanche, en réalisant des rangées d'orifices traversants régulièrement espacés et en décalant les orifices traversants **9** d'une rangée **4** d'une demi-période par rapport à la précédente, comme cela est représenté à la figure 3, le chemin thermique, c'est-à-dire la longueur totale de matériau que le flux thermique doit suivre pour passer des parties chaudes de la virole **1** aux parties froides, est allongé. Cette disposition des rangées **4** d'orifices traversants, également appelée disposition en quinconce **9,** a pour effet d'augmenter la résistance thermique de la virole **1.**

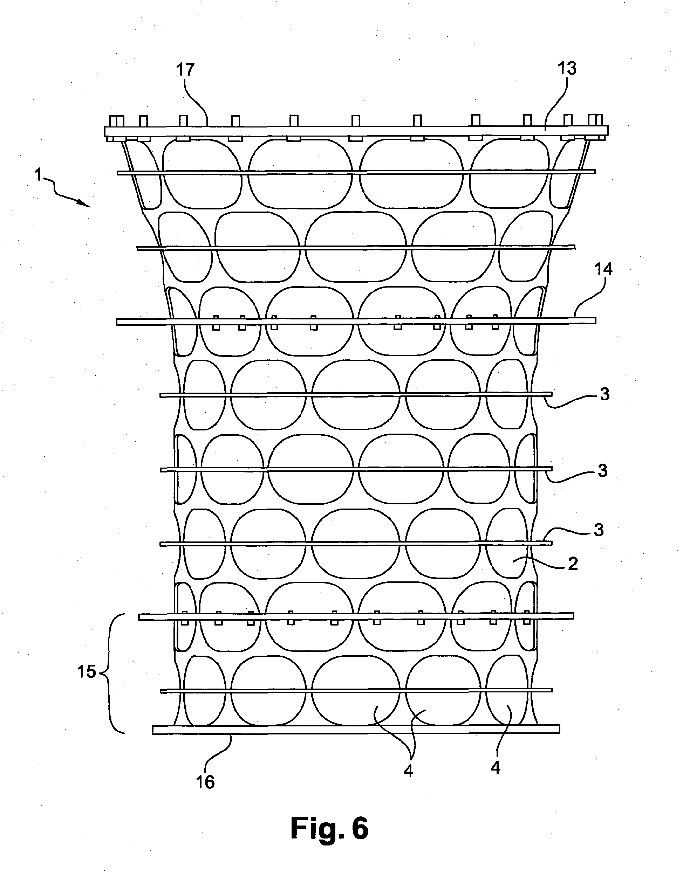

La taille des orifices traversants **2** ainsi que leur nombre et leur forme permettent d'influer sur la résistance mécanique de la virole **1** ainsi que sur l'efficacité de l'isolation thermique. En particulier, on peut utiliser des trous oblongs pour augmenter la longueur du chemin thermique, comme cela est représenté sur la figure 6

En effet, pour une largeur de trous donnée, lorsqu'il y a un grand nombre d'orifices traversants **2** dans la virole **1,** la transmission de la chaleur se fait par des chemins thermiques plus nombreux mais de section très réduite. Ainsi, plus la surface totale occupée par les orifices traversants **2** sur la surface de la virole **1** est grande, plus la conduction thermique est faible et le pouvoir d'isolation de la virole **1** est élevé.

La taille des orifices traversants **2** peut varier d'une rangée **4** à l'autre. Par exemple, il est avantageux d'avoir des orifices traversants **2** plus grands pour les rangées **4** supportant le rétreint thermique le plus important, les coefficients de dilatation variant avec la température. Pour l'inox, le plus grand rétreint thermique se situe entre 300 K et 100 K. En augmentant la longueur de la zone correspondant aux températures comprises entre 300 K et 100 K, on répartit les déformations sur une plus grande longueur, réduisant ainsi les contraintes thermomécaniques associées.

À l'échelle microscopique, la forme particulière des orifices traversants **2,** notamment au niveau des isthmes **6,** pourrait modifier la propagation des phonons (vibrations des atomes constituant le matériau dont est faite la virole **1)** et donc influencer la propagation de la chaleur dans la virole **1.**

En revanche, la structure lacunaire de la virole **1,** percée d'orifices traversants **2,** présente l'inconvénient de fragiliser la virole **1** en dehors de mesures particulières de renfort mécanique, et donc de réduire la charge maximale qu'elle est en mesure de supporter sans risque de flambement.

Des brides de renfort **3** sont donc solidarisées à la virole **1,** par exemple au moyen d'une soudure, de préférence au niveau des isthmes **6** de la virole **1.** En effet, ces zones, qui correspondent aux segments de lignes circonférentielles de la virole **1,** présentant le moins de matériau, sont des points faibles responsables des premiers modes de flambement, lorsque la virole **1** est soumise à d'importants efforts mécaniques par l'objet qu'elle supporte. Il est par conséquent avantageux de solidariser les brides de renfort annulaires **3,** suivant ces segments de lignes circonférentielles, à la virole **1.** Ces brides peuvent aussi être placées à l'intérieur de la virole ou bien à l'intérieur et à l'extérieur simultanément. Ces brides permettent aussi de réduire les contraintes mécaniques au niveau des isthmes sans vraiment augmenter la conduction thermique.

Ce positionnement privilégié des brides de renfort **3** au niveau des isthmes **6** répond en outre à une contrainte thermique. En effet, lors d'une mise en froid de la virole **1,** cette dernière et les brides de renfort **3** sont soumises à un rétreint thermique, qui donne lieu à des déformations mécaniques appelées « effet collerette ». Il est par conséquent avantageux de construire des brides de renfort **3** résistant au rétreint thermique sans être endommagées par un cycle de mise à froid. Ainsi, les brides de renfort **3** et leur position sur les isthmes répondent à une double exigence : une stabilité mécanique accrue pour assurer le blocage des modes de flambement de la virole **1** dus aux chargements mécaniques que la virole **1** supporte, et une souplesse accrue vis-à-vis des déformations induites par les variations de température dans la virole **1.** La rigidité est plus importante sur les lignes circonférentielles présentant le plus de matériau, par exemple entre deux rangées d'orifices traversants **4.** Il est donc peu avantageux de placer des brides entre deux rangées de tels orifices **4.**

Il est néanmoins envisageable de placer des brides **10** intermédiaires entre deux rangées **4** d'orifices traversants, suivant les lignes circonférentielles ne présentant pas d'orifices **2,** comme cela est représenté sur la figure 4. Dans la mesure où ces zones entre deux rangées **4** sont fortement soumises aux déformations induites par les variations de température (ou effet collerette) de la virole **1** au cours de son utilisation, il est avantageux de mettre en oeuvre des brides intermédiaires **10** sous la forme de plusieurs segments indépendants, ce qui revient à sectoriser les brides **10** pour les assouplir. De cette manière, les déformations subies par chaque segment d'une bride **10,** sous l'effet du rétreint thermique, restent faibles et la stabilité mécanique de la structure n'est pas affectée.

En se référant à la figure 5 qui est une vue de détail en perspective d'une virole **1,** l'épaisseur *e_{b}* des brides de renfort **3** est avantageusement choisie de manière à être sensiblement identique à l'épaisseur *eᵥ* de la virole **1.** En effet, la méthode de liaison préférentielle des brides de renfort **3** à la virole **1** est la soudure. La soudure est facilitée dans le cas où les deux éléments à solidariser ont des épaisseurs sensiblement identiques, notamment lorsque l'épaisseur de chaque bride de renfort est inférieure au double de l'épaisseur de la virole **1,** et supérieure à la moitié de l'épaisseur de la virole **1.** Par exemple, dans le cas de l'aimant supraconducteur mentionné précédemment, pour une épaisseur *eᵥ* de la virole **1** de 12 mm, cet optimum apparait pour une épaisseur *e_{b}* de bride de renfort **3** de 15 mm.

La largeur *l_{b}* des brides de renfort **3** est avantageusement choisie pour correspondre à un optimum de résistance mécanique de la virole **1.** Par exemple, pour une virole **1** ayant une épaisseur *eᵥ* de 12 mm, cet optimum se situe à une largeur *l_{b}* de bride de renfort **3** de 50 mm de section rectangulaire. De manière générale, il est avantageux de choisir des brides de renfort **3** dont la section est sensiblement rectangulaire et dont la largeur est supérieure à l'épaisseur.

Les brides de renfort **3** peuvent, en plus de leur rôle de renfort, remplir une seconde fonction de thermalisation. En effet, en portant les brides de renfort **3** à des températures inférieures à celles de la virole **1** au niveau des isthmes **6,** on augmente le chemin thermique entre ces températures intermédiaires et la température la plus basse. On isole ainsi la zone la plus froide, dont le refroidissement est le plus coûteux en énergie. L'isolation globale est la même mais elle est répartie différemment.. Par exemple, une virole **1** dont l'une des faces d'appui supporte un objet à la température de 1,8 K et dont l'autre extrémité est à la température ambiante d'environ 300 K aura avantageusement plusieurs brides de renfort **3** portées à des températures cryogéniques par un ou plusieurs thermostats (non représenté). Ainsi, ce support **1** comportant cinq rangées **4** d'orifices traversants, comportant chacun une bride de renfort **3,** aura trois brides de renfort **3** portées respectivement à 118 K, 43 K et 4,8 K.

Selon d'autres modes de réalisation, la virole **1** peut revêtir une pluralité de formes différentes, par exemple tronconique, ovale, polyédrique, régulière ou non régulière. De même, les orifices traversants peuvent prendre plusieurs formes. Il est également possible que les dimensions de la virole **1** soient différentes de celles mentionnées ci-avant. Une virole **1** plus épaisse présente l'avantage d'offrir une meilleure stabilité mécanique, mais présente l'inconvénient d'offrir en même temps une meilleure conduction thermique. Une virole **1** épaisse peut également présenter l'inconvénient de favoriser les contraintes de peau sur la surface extérieure du support **1,** en cas de fortes flexions (par exemple dues au retreint thermique), fragilisant ainsi l'ensemble de la virole **1** et augmentant le risque de flambement..

Le nombre d'orifices traversants **2** par rangée **4** peut varier d'une virole **1** à l'autre. On peut également envisager une virole **1** présentant un nombre d'orifices traversants **2** différent d'une rangée à l'autre, bien qu'on préférera une configuration dans laquelle le nombre d'orifices traversants **2** de deux rangées **4** voisines ont un sous-multiple commun le plus petit possible.

L'emplacement ainsi que le nombre de brides de renfort **3** peut également être différent de celui décrit ci-avant. En effet, une virole **1** présentant plusieurs séries de brides de renfort **3** sur chaque rangée **4** permettrait d'augmenter un peu plus la stabilité mécanique de la virole **1.** Cependant, la stabilité mécanique supplémentaire acquise par l'ajout de brides de renfort **3** supplémentaires sur une rangée est inférieure à celle obtenue par l'augmentation du nombre de rangées **4.** Il est donc préférable d'augmenter le nombre de niveaux **5** de rangées **4** d'orifices traversants, et n'avoir qu'une seule bride de renfort **3** au niveau des isthmes **6** de chaque rangée **4,** plutôt que d'augmenter le nombre de brides de renfort **3** par rangée **4** et donc le nombre de soudures. Il est en outre possible d'augmenter le nombre de niveaux **5** de rangées **4** d'orifices traversants en perçant plus d'orifices **2** ayant une taille plus petite.

La thermalisation, c'est-à-dire le maintien à une température donnée, des brides **3** n'est pas indispensable, et le choix des niveaux **5** sur lesquels une telle thermalisation est appliquée est fonction de la configuration particulière de la virole **1** et son utilisation. L'homme du métier pourra adapter ces paramètres en fonction de l'usage qui est fait de la virole **1.**

En guise d'exemple d'autres modes de réalisation de la présente invention, la figure 6 représente une virole **1** de forme sensiblement tronconique avec des orifices traversants **2** de forme sensiblement oblongue ayant tous une longueur de 72 mm et un diamètre de 104 mm. Cette virole **1** présente une hauteur de 900 mm, une épaisseur de 2 mm et un diamètre passant de 653 mm pour la face d'appui thermalisée **13** à la température ambiante à 520 mm pour la face d'appui thermalisée **16** à 4,2 K. Les brides de renfort **3** ont une épaisseur de 2 mm et une largeur de 16 mm, en accord avec ce qui a été dit précédemment. Cette virole **1** peut supporter une charge de 50 kg axialement, latéralement ou dans toutes les directions intermédiaires. Le matériau choisi pour fabriquer l'ensemble est l'acier inoxydable, et la virole ne présente que trois brides thermalisées, respectivement **17** à 300 K, **14** à 35 K, et une zone **15** à 4,2 K.

On a matérialisé sur la figure 1, des brides supérieure et inférieure **7**. Ces brides **7** ont pour fonction de servir d'interface entre le support et la charge à porter d'une part, et entre le support et le sol ou plan **12.**

Ces brides ne sont pas impératives. Cependant, plus elles sont rigides (ou plus leur liaison avec le plan est rigide), et plus leur capacité de bloquer un mode de flambage est important.

Bien que la présente description ne porte que sur des viroles **1** adaptées à une utilisation en cryogénie, la virole **1** peut être envisagée pour d'autres applications analogues, par exemple des applications dans lesquelles la température est plus élevée, sans que l'on ne s'éloigne de l'idée générale de l'invention. De même une utilisation comme support isolant électrique, par exemple à température ambiante, constitue aussi une application de l'invention.

## Revendications

1. Support évidé (1), comprenant deux faces d'appui, sensiblement parallèles l'une par rapport à l'autre, et séparées l'une de l'autre par une face latérale définissant un périmètre, ***caractérisé* en ce que** ladite face latérale comprend des orifices traversants (2), répartis sur au moins une rangée (4) sensiblement parallèle audites faces d'appui, et **en ce que** ledit support (1) comporte au moins une bride de renfort (3), en contact avec ladite face latérale dudit support (1), tout le long dudit périmètre de ladite face latérale, sur ou au voisinage de la ou de chaque rangée (4) d'orifices traversants (2).

2. Support (1) selon la revendication 1, ***caractérisé* en ce que** le support (1) a une forme sensiblement cylindrique.

3. Support (1) selon la revendication 1, ***caractérisé* en ce que** le support (1) a une forme sensiblement tronconique.

4. Support (1) selon l'une quelconque des revendications précédentes, ***caractérisé* en ce que** le support (1) possède une face d'appui circulaire formant une base.

5. Support (1) selon l'une quelconque des revendications précédentes, ***caractérisé* en ce que** les orifices traversants (2) de chaque rangée (4) sont régulièrement espacés, les orifices traversants d'une rangée étant décalés d'une demi période par rapport à ceux d'une rangée adjacente.

6. Support (1) selon l'une quelconque des revendications précédentes, ***caractérisé* en ce que** les orifices traversants (2) ont la même taille sur chaque rangée (4) et sont de taille différente entre au moins deux rangées.

7. Support (1) selon l'une quelconque des revendications précédentes, ***caractérisé* en ce que** pour chaque rangée, la dimension maximale de chaque orifice traversant est agencée sensiblement dans un même plan, la bride de renfort (3) associée à ladite rangée étant en contact avec la face latérale du support dans ledit plan.

8. Support (1) selon l'une quelconque des revendications précédentes, ***caractérisé* en ce qu'il** comprend en outre un thermostat en contact avec au moins une bride de renfort (3) pour maintenir celle-ci à une température constante.

9. Support (1) selon l'une quelconque des revendications précédentes, ***caractérisé* en ce que** le support (1) est réalisé en un matériau choisi dans le groupe constitué de l'acier inoxydable, le titane, le cuivre, l'aluminium, l'Epoxy, la céramique, ainsi que l'un des mélanges d'au moins deux desdits matériaux.

10. Support (1) selon l'une quelconque des revendications précédentes, ***caractérisé* en ce que** les brides de renfort (3) ont une épaisseur inférieure au double de l'épaisseur du support et supérieure à la moitié de l'épaisseur dudit support.

11. Support (1) selon l'une quelconque des revendications précédentes, ***caractérisé* en ce que** chaque bride de renfort (3) a une section rectangulaire dont la dimension la plus grande est dans le sens radial audit support.

12. Support (1) selon l'une quelconque des revendications précédentes, ***caractérisé* en ce que** le support (1) comporte également, entre deux rangées (4) d'orifices traversants (2), des segments de brides (10), disposés de façon sensiblement parallèle aux faces d'appui dudit support, tout le long du périmètre de la face latérale dudit support.

13. Support (1) selon l'une quelconque des revendications précédentes, ***caractérisé* en ce que** ledit support est un dispositif isolant thermique.

14. Support (1) selon l'une quelconque des revendications précédentes, ***caractérisé* en ce que** ledit support est un dispositif isolant électrique.

## Patentansprüche

1. Ausgesparte Halterung (1) mit zwei Auflageflächen, die im Wesentlichen parallel zueinander verlaufen, und durch eine Seitenfläche, die einen Umfang bestimmt, voneinander getrennt sind, ***dadurch gekennzeichnet, dass*** die Seitenfläche Durchgangsöffnungen (2) aufweist, die über mindestens eine Reihe (4) verteilt sind, welche im Wesentlichen parallel zu den Auflageflächen verläuft, und dass die Halterung (1) mindestens einen Verstärkungsflansch (3) aufweist, der mit der Seitenfläche der Halterung (1) entlang dem Umfang der Seitenfläche an oder in der Nähe der oder jeder Reihe (4) der Durchgangsöffnungen (2) in Berührung steht.

2. Halterung (1) nach Anspruch 1, ***dadurch gekennzeichnet, dass*** die Halterung (1) eine im Wesentlichen zylindrische Form aufweist.

3. Halterung (1) nach Anspruch 1, ***dadurch gekennzeichnet, dass*** die Halterung (1) eine im Wesentlichen kegelstumpfartige Form aufweist.

4. Halterung (1) nach einem der vorhergehenden Ansprüche, ***dadurch gekennzeichnet, dass*** die Halterung (1) eine kreisförmige Auflagefläche aufweist, die eine Basisfläche bildet.

5. Halterung (1) nach einem der vorhergehenden Ansprüche, ***dadurch gekennzeichnet, dass*** die Durchgangsöffnungen (2) jeder Reihe (4) gleichmäßig beabstandet sind, wobei die Durchgangsöffnungen einer Reihe gegenüber jenen einer angrenzenden Reihe um eine halbe Periode versetzt sind.

6. Halterung (1) nach einem der vorhergehenden Ansprüche, ***dadurch gekennzeichnet, dass*** die Durchgangsöffnungen (2) an jeder Reihe (4) dieselbe Größe aufweisen, und zwischen mindestens zwei Reihen eine unterschiedliche Größe aufweisen.

7. Halterung (1) nach einem der vorhergehenden Ansprüche, ***dadurch gekennzeichnet, dass*** die maximale Abmessung jeder Durchgangsöffnung bei jeder Reihe im Wesentlichen in derselben Ebene angeordnet ist, wobei der mit der Reihe verbundene Verstärkungsflansch (3) mit der Seitenfläche der Halterung in der Ebene in Berührung steht.

8. Halterung (1) nach einem der vorhergehenden Ansprüche, ***dadurch gekennzeichnet, dass*** sie darüber hinaus einen Thermostat aufweist, der mit mindestens einem Verstärkungsflansch (3) in Berührung steht, um diesen auf einer konstanten Temperatur zu halten.

9. Halterung (1) nach einem der vorhergehenden Ansprüche, ***dadurch gekennzeichnet, dass*** die Halterung (1) aus einem Material hergestellt ist, das aus der Gruppe ausgewählt ist, die folgendes aufweist: rostfreien Stahl, Titan, Kupfer, Aluminium, Epoxy, Keramik sowie eine der Mischungen aus mindestens zwei der genannten Materialien.

10. Halterung (1) nach einem der vorhergehenden Ansprüche, ***dadurch gekennzeichnet, dass*** die Verstärkungsflansche (3) eine Stärke aufweisen, die unter der doppelten Stärke der Halterung und über der Hälfte der Stärke der Halterung liegt.

11. Halterung (1) nach einem der vorhergehenden Ansprüche, ***dadurch gekennzeichnet, dass*** jeder Verstärkungsflansch (3) einen rechteckigen Querschnitt aufweist, dessen größte Abmessung in radialer Richtung der Halterung verläuft.

12. Halterung (1) nach einem der vorhergehenden Ansprüche, ***dadurch gekennzeichnet, dass*** die Halterung (1) zwischen zwei Reihen (4) mit Durchgangsöffnungen (2) auch Flanschsegmente (10) aufweist, die entlang dem Umfang der Seitenfläche der Halterung im Wesentlichen parallel zu den Auflageflächen der Halterung angeordnet sind.

13. Halterung (1) nach einem der vorhergehenden Ansprüche, ***dadurch gekennzeichnet, dass*** es sich bei der Halterung um eine wärmeisolierende Vorrichtung handelt.

14. Halterung (1) nach einem der vorhergehenden Ansprüche, ***dadurch gekennzeichnet, dass*** es sich bei der Halterung um eine elektrisch isolierende Vorrichtung handelt.

## Claims

1. A hollowed support (1), comprising two bearing surfaces, substantially parallel to each other, and separated from each other by a lateral surface defining a perimeter, ***characterized in that*** said lateral surface comprises through openings (2), distributed along at least one row (4) substantially parallel to said bearing surfaces, and **in that** said support (1) comprises at least one stiffening flange (3), in contact with said lateral surface of said support (1), all along said perimeter of said lateral surface, on or in the vicinity of the or each row (4) of through openings (2).

2. The support (1) of claim 1, ***characterized in that*** the support (1) has a substantially cylindrical shape.

3. The support (1) of claim 1, ***characterized in that*** the support (1) has a substantially tapered shape.

4. The support (1) of any of the foregoing claims, ***characterized in that*** the support (1) has a circular bearing surface forming a base.

5. The support (1) of any of the foregoing claims, ***characterized in that*** the through openings (2) of each row (4) are regularly spaced apart, the through openings of a row being offset by one half-period with respect to those of an adjacent row.

6. The support (1) of any of the foregoing claims, ***characterized in that*** the through openings (2) have the same size on each row (4) and have a different size between at least two rows.

7. The support (1) of any of the foregoing claims, ***characterized in that*** for each row, the maximum dimension of each through opening is substantially arranged in a same plane, the stiffening flange (3) associated with said row being in contact with the lateral surface of the support in said plane.

8. The support (1) of any of the foregoing claims, ***characterized in that*** it further comprises a thermostat in contact with at least one stiffening flange (3) to maintain it at a constant temperature.

9. The support (1) of any of the foregoing claims, ***characterized in that*** the support (1) is made of a material selected from the group comprising stainless steel, titanium, copper, aluminum, epoxy, ceramics, as well as one of the mixtures of at least two of said materials.

10. The support (1) of any of the foregoing claims, ***characterized in that*** the stiffening flanges (3) have a thickness lower than twice the thickness of the support and greater than half the thickness of said support.

11. The support (1) of any of the foregoing claims, ***characterized in that*** each stiffening flange (3) has a rectangular cross-section having its largest dimension in the radial direction of said support.

12. The support (1) of any of the foregoing claims, ***characterized in that*** the support (1) also comprises, between two rows (4) of through openings (2), segments of flanges (10), arranged to be substantially parallel to the bearing surfaces of said support, all along the perimeter of the lateral surface of said support.

13. The support (1) of any of the foregoing claims, ***characterized in that*** said support is a thermally-isolating device.

14. The support (1) of any of the foregoing claims, ***characterized in that*** said support is an electrically-isolating device.
